# EUROPÄISCHE PATENTSCHRIFT

(11) **EP 0 603 761 B1**
(45) Veröffentlichungstag und Bekanntmachung des Hinweises auf die Patenterteilung: **09.04.1997**
(21) Anmeldenummer: 93120400.2
(22) Anmeldetag: 17.12.1993
(51) Int. Cl.: B65G 69/00, F16B 5/06

(54) **Dichtung des Spaltes zwischen dem Rand einer Gebäudeöffnung und dem Heck eines andockenden Fahrzeuges**
Sealing of the gap between the edge of an aperture in a building and the rear of a vehicle
Joint pour couvrir la fente entre de bord d'une ouverture d'un bâtiment et l'arrière d'un véhicule

(30) Priorität: 21.12.1992 DE 4243297
(43) Veröffentlichungstag der Anmeldung: 29.06.1994
(73) Patentinhaber: ALTEN GERÄTEBAU GMBH, D-30974 Wennigsen (DE)
(72) Erfinder: Alten, Kurt, D-30974 Wennigsen (DE)
(74) Vertreter: Depmeyer, Lothar

(56) Entgegenhaltungen:
- CA-A- 1 184 745
- DE-U- 8 803 333
- FR-A- 2 510 650

## Beschreibung

Die Erfindung bezieht sich auf eine verformbare Dichtung des Spaltes zwischen dem Rand einer Gebäudeöffnung und dem Heck eines andockenden Fahrzeuges nach dem Oberbegriff des Anspruchs 1.

Bei den bekannten Dichtungen der obigen Art sind die Metallprofile durch Schrauben mit dem anderen Profil verbunden; dies ist umständlich, zumal eine sog. Vorfertigung in vielen Fällen nicht möglich ist und die Endmontage regelmässig am Ort geschehen muss. Diese Nachteile will die Erfindung beseitigen, demgemäss liegt der Erfindung die Aufgabe zugrunde, die Dichtungen der eingangs erwähnten Art so zu verbessern, dass eine schnelle, sichere Befestigung der Metallprofile an den anderen erwähnten Profilen stattfinden kann.

Zur Lösung dieser Aufgabe sind erfindungsgemäss die Merkmale nach dem Kennzeichnungsteil des Anspruchs 1 vorgesehen. Dadurch ist es möglich, das Metallprofil mit der daran angeordneten Plane ohne Werkzeug, schnell und sicher durch Einhängen und Einschnappenlassen der Schnappfeder zu befestigen. Besonders vorteilhaft ist es dabei, wenn die Befestigungsmittel zur Anbringung der Plane gleichzeitig zur Befestigung der Schnappfeder herangezogen werden, um so zusätzliche Befestigungsmittel für die Schnappfeder einzusparen.

Die Erfindung soll vorzugsweise zur Anbringung und Montage des Metallprofils dienen, mit der das erwähnte Querteil an der Traverse aufgehängt wird.

Weitere Einzelheiten der Erfindung werden anhand der Zeichnung erläutert, in der ein Ausführungsbeispiel der Erfindung dargestellt ist.

Es zeigen :

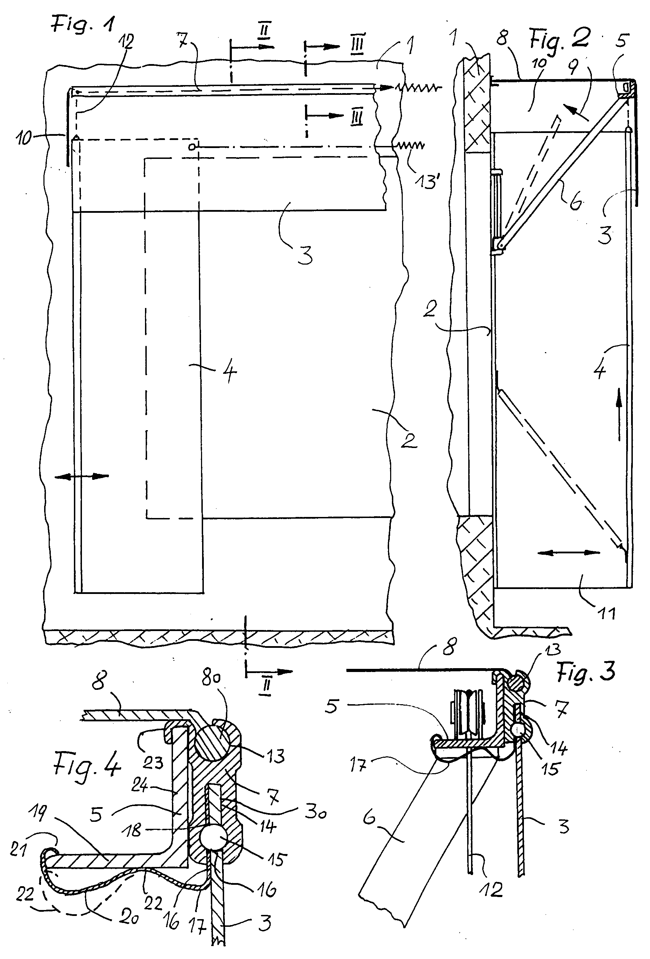

Fig. 1 die linke Hälfte einer verformbaren Dichtung der beanspruchten Art,
Fig. 2 einen Schnitt nach der Linie II - II von Fig, 1,
Fig. 3 einen Teilschnitt nach der Linie III - III von Fig. 1 und
Fig. 4 Teile des Schnitts gemäss Fig. 3 in vergrösserter Darstellung.

Die Wandung 1 des Gebäudes z.B. eines Lagerhauses weist eine Gebäudeöffnung 2 auf. Um den Spalt zwischen dem Rand dieser Öffnung und dem Heck eines an die Öffnung herangefahrenen Fahrzeuges abzudichten, ist die erfindungsgemässe Dichtung vorgesehen

Mit Abstand vom Gebäude bzw. seiner Wandung 1 ist eine verformbare Schürze angeordnet, die aus einem oben gelegenen Querteil 3 und zwei zu beiden Seiten der Gebäudeöffnung 2 befindlichen, senkrechten Streifen 4 besteht. Das vor den Streifen 4 befindliche Querteil 3 ist gardinenartig aufgehängt und oben getragen von einer biegesteifen Traverse 5 in Form eines Winkeleisens, das von schräg nach oben gerichteten Streben 6 unterfangen ist. Mit der Traverse 5 ist ein aus Aluminium bestehendes Metallprofil 7 verbunden, das der Aufhängung des Querteils 3 und einer Dachplane 8 dient, die mit ihrem hinteren Ende an der Wandung 1 befestigt ist.

Die Traverse 5 mit dem Querteil 3 und der Dachplane 8 können im Sinne des Pfeiles 9 angehoben werden.

An beiden Enden der Dachplane 8 sind Überhänge 10 angeorodnet, die als herabhängende Lappen ausgeführt sind. Sie überdecken geringfügig Seitenteile 11, die von den seitlich aussen gelegenen und dort versteiften Rändern der Streifen 4 zur Wandung 1 geführt und dort befestigt sind.

Im übrigen sind die Streifen 4 mit den Seitenteilen 11 an Seilen 12 aufgehängt, zwischen den beiden Streifen 4 kann zudem eine elastische Seilverbindung 13' bestehen

Es sei erwähnt, dass die Planen ( Teile 3, 4, 11 und 8) biegsam und reissfest sind und z.B. aus gummiertem Gewebe bestehen können.

Das Metallprofil 7 hat oben und unten je eine Längsnut, wobei die oben gelegene Nut 13 zur Aufnahme und Halterung des verdickten Randes 80 der Dachplane 8 dient. Die unten gelegene Längsnut wird hingegen von einem senkrechten Schlitz 14 gebildet, der im unteren Bereich verbreitert ist und zur Aufnahme von Kugeln 15 dient. In dem Schlitz 14 befindet sich der obere Rand 30 des Querteils 3, der mit einer Vielzahl kleiner Bohrungen 16 zur Aufnahme der Kugeln 15 versehen ist. Infolge dieser Ausbildung wird der Rand 30 gegen Herausfallen aus dem Schlitz 14 gesichert. Zusammen mit dem Rand 30 ist aber auch der senkrechte Schenkel 16 einer Blattfeder 17 in dem Schlitz 14 angeordnet, wobei die Blattfeder 17 ebenfalls mit den Kugeln Ausstanzungen 18 versehen ist. Es wird so ebenfalls der Schenkel 16 im Schlitz gehalten.

Die Blattfeder 17 ist unten in Richtung auf das Gebäude abgebogen und berührt dort zunächst den waagerechten, unten liegenden Schenkel 19 der Traverse 5 etwa auf ein Drittel seiner Länge. Danach ist die Blattfeder 17 wieder nach unten gebogen; das freie Ende des Bogens 20 hat eine kurze Abbiegung 21, die mit elastischer Eigenspannung auf der Oberseite des Schenkels 19 aufliegt. Der freie Abschnitt der Blattfeder 17 mit dem Bogen 20 ist vorgespannt, wenn die Blattfeder 17 montiert ist, da der Bogen 20 im noch nicht montierten Zustand der Blattfeder 17 die gestrichelte Formgebung bei 22 aufweist. Durch Hochbiegen des Bogens 20 wird die Montage vollzogen, wobei sich die Blattfeder 17 bei 22 unten an der Traverse 5 bzw. am Schenkel 19 abstützen kann.

Am oberen Rand des Profils 7 ist dieses hakenförmig gestaltet. Der Haken 23 umschliesst dabei das obere, freie Ende des senkrechten Schenkels 24.

Da die Traverse 5 oben aufgrund der Hakenverbindung abgesichert ist und unten die Blattfeder 17 den freien Rand des Schenkels 19 umschliesst und weil weiterhin die Blattfeder 17 innerhalb des Schlitzes 14 festgehalten wird, erfolgt eine sichere Halterung der Traverse 5 und damit der Dachplane 8 und des Querteils 3.

Die Montage des Metallprofils 7 mit den zugehörigen Planen 3 und 8 ist deshalb sehr einfach, weil es nur eines Andrückens des Bogens 20 ( Druck von unten her ) bedarf, um die Halterung
herbeizuführen. Von den schmalen Blattfedern 17 sind mehrere über die Länge des Querteils 3 verteilt angeordnet.

## Patentansprüche

1. Verformbare Dichtung des Spaltes zwischen dem Rand einer Gebäudeöffnung und dem Heck eines andockenden Fahrzeuges mit einer Schürze zur Beaufschlagung durch das Heck des Fahrzeuges, wobei die Schürze aus zwei zu beiden Seiten der Gebäudeöffnung befindlichen, senkrechten Streifen (4) und einem am oberen Streifenende befindlichen, an einer Traverse (5) aufgehängten Querteil (3) besteht, von dem aus sich nach hinten zum Gebäude hin eine Dachplane (8) erstreckt und sich von den seitlichen, versteiften Rändern der Streifen (4) aus zum Gebäude hin Seitenteile (11) erstrecken, wobei die Schürze, die Dachplane (8) und ggfs. auch die Seitenteile (11) aus biegsamen Planen bestehen und wobei weiterhin zumindest der Rand einer Plane z.B. randverdickt an einem Metallprofil (7) befestigt ist, das mit der Traverse (5) verbunden ist, dadurch gekennzeichnet, dass das Metallprofil (7) mit einem hakenartigen Teil (23) einen Schenkel (24) der Traverse (5) und mit einer Schnappfeder (17 ) einen anderen Schenkel (19) der Traverse (5) umschliesst.

2. Dichtung nach Anspruch 1, dadurch gekennzeichnet, dass die Blattfeder (17) nur unter elastischer Verformung in ihre Wirkstellung bringbar ist ( Bögen 20, 22 ).

3. Dichtung nach Anspruch 1, dadurch gekennzeichnet, dass die Blattfeder (17) und die zugehörige Plane (3) gemeinsame Befestigungsmittel (15) zur Anbringung an dem Metallprofil (7) haben.

4. Dichtung nach Anspruch 1 und 3, dadurch gekennzeichnet, dass die Blattfeder (17) und die Plane (3) gemeinsam in einem Schlitz (14) angeordnet sind und korrespondierende Ausnehmungen zur Aufnahme eines Sperrkörpers ( Kugel 15 ) haben, wobei sich der Sperrkörper in einer seiner Gestalt entsprechenden Schlitzverbreiterung befindet.

5. Dichtung nach Anspruch 1, dadurch gekennzeichnet, dass das freie Ende der Blattfeder (17) eine Anlagestelle (22) an der Traverse (5) aufweist und von dort über einen vorgespannten Bogen (20) in das hakenförmige Endstück (21) der Blattfeder übergeht, mit dem sie den Schenkel (19 ) der Traverse (5) umschliesst.

6. Dichtung nach Anspruch 1, dadurch gekennzeichnet, dass am oberen Rand des Metallprofils (7) mit dem hakenförmigen Teil (23) die Dachplane (8) befestigt und vorzugsweise hier in einer Nut gehalten ist, während am unteren Rand des Metallprofils (7) das Querteil (3) und die Schnappfeder (17) befestigt sind.

7. Dichtung nach Anspruch 1 und 6, dadurch gekennzeichnet, dass die Traverse (5) ein Winkeleisen mit einem nach oben gerichteten Schenkel (24) und einem zum Gebäude (1) hin gerichteten Schenkel (19) ist und dass das Metallprofil (7) den oberen Rand des nach oben gerichteten Schenkels (24) und mit der Schnappfeder (17) den freien Rand des anderen Schenkels (19) umschliesst.

## Claims

1. Deformable seal for sealing the gap between the edge of a building opening and the rear of a vehicle being positioned thereat, having an apron for impingement by the rear of the vehicle, the apron comprising two vertical strips (4), which are disposed on both sides of the building opening, and a transverse member (3), which is situated on the end of the upper strip and is suspended from a cross-piece member (5), a top cover (8) extending from said transverse member rearwardly to the building, and lateral portions (11) extending from the lateral, reinforced edges of the strips (4) to the building, the apron, the top cover (8) and possibly also the lateral portions (11) comprising flexible covers and, in addition, at least the edge of one cover being mounted on a metal profile (9), e.g. in an edge thickened manner, which metal profile is connected to the cross-piece member (5), characterised in that the metal profile (7) surrounds a portion (24) of the cross-piece member (5) with a hook-like member (23) and surrounds another portion (19) of the cross-piece member (5) with a catch spring (17).

2. Seal according to claim 1, characterised in that the plate spring (17) can only be brought into its operational position by resilient deformation (curves 20, 22).

3. Seal according to claim 1, characterised in that the plate spring (17) and the associated cover (3) have common securing means (15) for attachment to the metal profile (7).

4. Seal according to claims 1 and 3, characterised in that the plate spring (17) and the cover (3) are jointly disposed in a slot (14) and have corresponding recesses for the accommodation of a locking element (ball 15), the locking element being situated in a widened part of the slot corresponding to its configuration.

5. Seal according to claim 1, characterised in that the free end of the plate spring (17) has an abutment location (22) for abutment with the cross-piece member (5) and extends from there via an initially tensioned curve (20) into the hook-like end-piece (21) of the plate spring, with which end-piece said spring surrounds the portion (19) of the cross-piece member (5).

6. Seal according to claim 1, characterised in that the top cover (8) is mounted on the upper edge of the metal profile (7) with the hook-like member (23) and is preferably retained here in a groove, while the transverse member (3) and the catch spring (17) are mounted on the lower edge of the metal profile (7).

7. Seal according to claims 1 and 6, characterised in that the cross-piece member (5) is an angle iron with an upwardly orientated portion (24) and a portion (19) which is orientated towards the building (1), and in that the metal profile (7) surrounds the upper edge of the upwardly orientated portion (24) and surrounds the free edge of the other portion (19) with the catch spring (17).

## Revendications

1. Dispositif déformable pour rendre étanche l'intervalle compris entre le bord d'une baie de bâtiment et l'arrière d'un véhicule automobile qui y accoste, comprenant une jupe destinée à être sollicitée par l'arrière du véhicule, la jupe étant constituée de deux bandes (4) verticales se trouvant de part et d'autre de la baie du bâtiment et d'une partie transversale (3) se trouvant à l'extrémité supérieure des bandes suspendues à une traverse (5) et de laquelle s'étend vers l'arrière en direction du bâtiment une bâche de toiture (8) et des parties latérales (11) s'étendant des bords latéraux raidis des bandes (4) vers le bâtiment, la jupe, la bâche de toiture (8) et, le cas échéant, également les parties latérales (11) étant en bâches souples et, en outre, au moins le bord d'une bâche étant fixé, par exemple en étant épaissi sur le bord, à un profilé (7) métallique qui est relié à la traverse (5), caractérisé en ce que le profilé (7) métallique entoure, par une partie (23) en forme de crochet, une branche (24) de la traverse (5) et, par un ressort à déclic (17), une autre branche (19) de la traverse (5).

2. Dispositif selon la revendication 1, caractérisé en ce que le ressort à lame (17) ne peut être amené dans sa position active que par déformation élastique (arc 20, 22).

3. Dispositif selon la revendication 1, caractérisé en ce que le ressort à lame (17) et les bâches (3) qui y correspondent ont des moyens de fixation (15) communs pour le montage sur le profilé (7) métallique.

4. Dispositif selon la revendication 1 ou 3, caractérisé en ce que le ressort à lame (17) et la bâche (3) sont disposés en commun dans une fente (14) et ont des évidements correspondants de réception d'une pièce de blocage (bille 15), la pièce de blocage se trouvant dans un élargissement de la fente correspondant à sa forme.

5. Dispositif selon la revendication 1, caractérisé en ce que l'extrémité libre du ressort à lame (17) comporte un point (22) de contact avec la traverse (5) et de là se transforme par un arc (20) mis sous tension préalable en la pièce d'extrémité (21) en forme de crochet du ressort à lame, par laquelle elle entoure la branche (19) de la traverse (5).

6. Dispositif selon la revendication 1, caractérisé en ce que la bâche de toiture (8) est fixée au bord supérieur du profilé (7) métallique par la partie (23) en forme de crochet et, de préférence, y est maintenue dans une gorge, tandis que la partie transversale (3) et le ressort à déclic (17) sont fixés au bord inférieur du profilé (7) métallique.

7. Dispositif selon la revendication 1 ou 6, caractérisé en ce que la traverse (5) est une cornière ayant une branche (24) dirigée vers le haut et une branche (19) dirigée vers le bâtiment (1) et en ce que le profilé (7) métallique entoure le bord supérieur de la branche (24) dirigée vers le haut et, par le ressort à déclic (17), le bord libre de l'autre branche (19).
